# EUROPEAN PATENT SPECIFICATION

(11) **EP 1 873 409 B1**
(45) Date of publication and mention of the grant of the patent: **14.04.2010**
(21) Application number: 07012199.1
(22) Date of filing: 21.06.2007
(51) Int. Cl.: F16C 33/30, F16C 33/62, F16C 33/64, C23C 8/22, F16C 33/34, F16C 33/36, F16C 33/12, F16C 33/14

(54) **Rolling/sliding part and production method thereof**
Roll-/Gleitelement und Herstellungsverfahren dafür
Pièce roulante/coulissante et son procédé de fabrication

(30) Priority: 22.06.2006 JP 2006172181
(43) Date of publication of application: 02.01.2008
(73) Proprietor: JTEKT Corporation, Osaka-shi Osaka 542-8502 (JP)
(72) Inventor: Kizawa, Katsuhiko, Chuo-ku Osaka-shi Osaka 542-8502 (JP); Mikami, Tsuyoshi, Chuo-ku Osaka-shi Osaka 542-8502 (JP)
(74) Representative: Schaeberle, Steffen

(56) References cited:
- EP-A- 1 489 318
- EP-A- 1 614 761
- JP-A- 2004 052 101
- JP-A- 2004 285 460
- US-A1- 2001 015 244

## Description

### BACKGROUND OF THE INVENTION

### 1. Field of the Invention

The invention relates to a rolling/sliding part and a production method thereof, in more detail, a rolling/sliding part that is suitably used as a rolling part that is used as a bearing ring and a rolling element of a rolling bearing where a lubricant oil in which a foreign matter is mingled is used or as a sliding bearing part and a producing method thereof.
In the range of the specification and claims of the invention, a rolling/sliding part means a part that comes into a pure rolling contact, a pure sliding contact and a contact where a rolling contact and a sliding contact are mingled.

### 2. Relater Art

As a rolling bearing that is used with a lubricant oil in which a foreign matter is mingled or a bearing ring and a rolling element of a rolling bearing that is miniaturized and saved in weight to improve the fuel cost of, for instance, an automobile, a rolling/sliding part that is produced in such a manner that a processed part raw material formed into a predetermined shape from a bearing steel (high carbon chromium bearing steel) such as JIS SUJ 2 is heated in a carburizing atmosphere of which carbon potential is 1.2% or more at a temperature in the range of 840 to 870°C for 3 hr or more, followed by quenching, further followed by tempering is known, in which a total carbon amount of a surface layer portion in the range from a surface up to a depth to which the maximum shearing force works is rendered in the range of 1.0 to 1.6% by weight, a solid solution carbon amount in a matrix of the surface layer portion is rendered in the range of 0. 6 to 1.0% by weight, carbide is precipitated in the surface layer portion, an amount of the carbide is rendered in the range of 5 to 20% by area ratio and a grain diameter thereof is rendered 3 µm or less (JP-A No. 2004-52101).
However, in applications where more miniaturization of parts and longer lifetime thereof under severe service conditions are demanded, performance higher than that of the rolling/sliding part described in JP-A No. 2004-52101 is in demand. In particular, it has been known that, when a rolling/sliding part is used in lubricant oil in which a foreign matter is mingled, in comparison with a case different therefrom, the lifetime is largely deteriorated. Accordingly, a countermeasure for that is in strong demand. As a countermeasure for realizing a longer lifetime in lubricant oil contaminated with a foreign matter, so far, on a surface layer portion of a carburized rolling/sliding part, soft residual austenite is formed by substantially 20%. That is, since the residual austenite has an effect of mitigating a stress concentration in the surrounding of an indentation generated when a foreign matter is bitten in, cracks caused by the generation of indentation can be retarded in generation and progress. Accordingly, in order to further improve the performance of an existing rolling/sliding part, it is considered to further increase an amount of the residual austenite of a surface layer portion to such a huge amount as exceeding 30%.
However, when an amount of the residual austenite of a surface layer portion is increased in the JIS SUJ2, there is a large problem described below. That is, since the residual austenite is a soft structure, when an amount thereof is increased to 40% or more, the Rockwell C hardness (hereinafter, referred to as HRC) of 62 or more is difficult to obtain and the static load capacity becomes insufficient; accordingly, local permanent deformation caused by overload and impact load during rest or low-speed rotation is caused to result in disturbing smooth rotation of a bearing. In order to overcome the problem, it is considered to apply high concentration carburizing (a carbon amount of a surface layer portion is made 1.6% by weight or more) to a processed part raw material made of JIS SUJ2. However, when the JIS SUJ2 is carburized, carbide precipitated in a surface layer portion becomes rich with M₃C type carbide {= Fe₃C, (Fe, Cr)₃C} having the Vickers hardness in the range of 1150 to 1760 such as cementite. The M₃C type carbide is speedier in comparison with other alloy carbides (M₇C₃, MC) in the growth speed of carbide at the carburizing (reference literature: Takayama, Journal of the Japan Institute of Metals, 11, 45(1981), 1195) and low in the hardness (M₇C₃ and MC are 1800 or more in the Vickers hardness). Accordingly, there is a problem in that, since an average grain diameter of the carbide becomes larger, a reinforcement amount due to the dispersed precipitation is deteriorated and thereby an improvement in the hardness due to the carbide precipitation becomes smaller. Furthermore, the carbide is caused to be coarser, resulting in a problem in that an improvement in the rolling lifetime cannot be sufficiently obtained.
However, an approach in which an amount of Cr is increased to make use of the M₇C₃ type carbide to improve the rolling life under foreign matter contamination is not a novel one and an invention described in for instance JP-B No. 06-11899 has been proposed. However, in the invention, although kinds and area ratios of carbides after carburization are described, the invention does not particularly describe a distribution state such as number and magnitude and only describes that the coarsening has to be inhibited. Accordingly, since the carbide cannot be sufficiently miniaturized, there is a problem in that, when the residual austenite amount is such large as substantially 50%, high hardness cannot be maintained and a sufficient improvement in the lifetime cannot be obtained.

Furthermore, in JP-A No. 01-55423, a method where, with an existing case hardened steel, total carburization or carburization nitriding is applied to secure a certain degree of surface hardness and a residual austenite amount is heightened to improve the rolling life under a lubrication environment where foreign matter is mingled is proposed. However, there is a problem in that a problem same as that in the case of the JIS SUJ2 is caused and excellent rolling life cannot be obtained.
The invention intends to resolve the foregoing problems and to provide a rolling/sliding part that can more elongate the life when it is used as a bearing ring and a rolling element of a rolling bearing and as a sliding bearing part, in which lubricant oil contaminated with foreign matter is used, and can increase static load capacity to reduce a local permanent deformation amount that is caused owing to overload and impact load during rest and low-speed rotation, that is, can increase the indentation resistance and a production method thereof.
According to a first aspect of the invention, a rolling/sliding part is formed of a steel having a surface layer portion a surface of which is carburized, wherein an area ratio of a total precipitated carbide of the surface layer portion is in the range of 15 to 25%, of the total precipitated carbide present of the surface layer portion 50% or more of the carbide by the area ratio is made of a M₇C₃ type and/or M₂₃C₆ type, an average grain diameter of the carbide of the surface layer portion is in the range of 0.3 to 0.6µm, a maximum grain diameter thereof is 4 µm, the surface hardness is 62 or more by Rockwell C hardness and a solid solution carbon amount in a residual austenite of the surface layer portion is in the range of 0.95 to 1.15% by weight.
Here, the surface layer portion means a portion that is carburized and clearly contains much C relative to an inner portion and a depth portion that affects on the life of a rolling and sliding surface, for instance, in a rolling and sliding part that is used in oil contaminated with foreign matters, a range from 0 to 50 µm from the outermost surface. In what follows, the surface layer portion is identical.
In the rolling/sliding part of the first aspect, reasons why for limiting the respective numerical values are as follows.

### Area Ratio of Total Precipitated Carbide of Surface Layer Portion

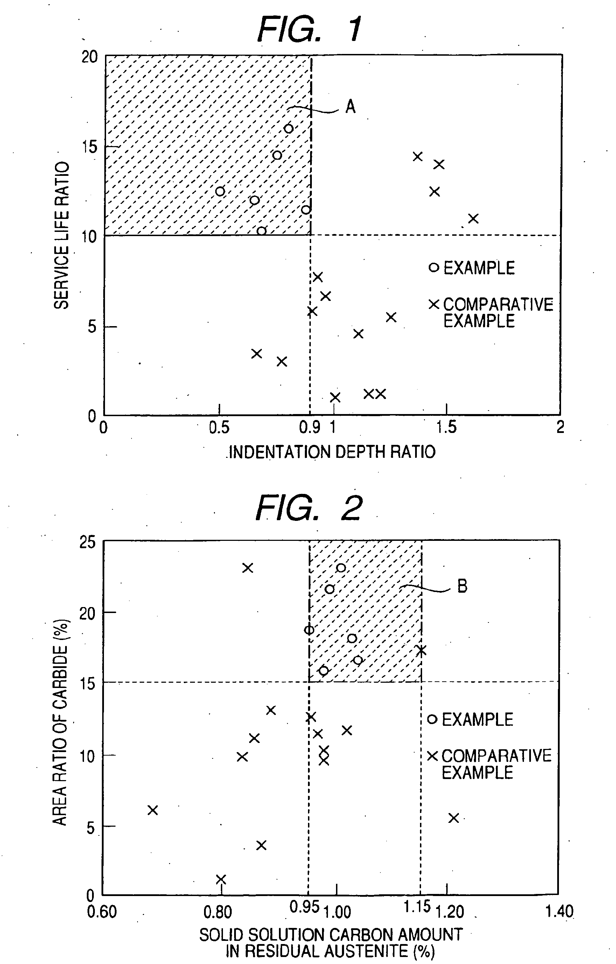

From results of evaluation tests of examples and comparative examples described below, it was found that rolling/sliding parts of which service life ratio (L₁₀ service life ratio when L₁₀ service life of quenched and tempered JIS SUJ2 is assigned to 1) is 10 or more and of which indentation depth ratio (depth ratio when the indentation depth of quenched and tempered JIS SUJ2 is assigned to 1) is 0.9 or less exist in a region A hatched with a chained line in Fig 1 that expresses relationship between the service life ratios and the indentation depth ratios and was found as well that the area ratios of total precipitated carbides of the rolling/sliding parts and solid solution carbon amounts in residual austenite exist in a region B hatched with a chained line in Fig. 2 that expresses the relationship therebetween. Based on the results, the lower limit of the area ratio of carbide in the region B shown in Fig. 2, that is, 15% is taken as a lower limit value of the area ratio. Furthermore, an upper limit value of the area ratio, that is, 25%, is determined because, when the area ratio exceeds the upper limit value, coarse carbide is generated to be a starting point of the rolling fatigue crack and thereby short life of the rolling/sliding part is caused.

### Amount of M₇C₃ Type and/or M₂₃C₆ Type in Total Precipitated Carbide

Non-solid solution carbide precipitated in a carburized layer of high carbon concentration of a surface and remaining as precipitated after the carburizing is M₃C type carbide in general steel for machine structural use. However, as mentioned above in the first aspect of the invention, when, among the total precipitated carbide present in the surface layer portion, 50% or more by area ratio of the carbide is formed into M₇C₃ type and/or M₂₃C₆ type that is high in the hardness and difficult in coarsening, a grain diameter of carbide of a carburized surface layer portion can be made finer than that of steel mainly made of M₃C type carbide and thereby the service life under the presence of foreign matter can be largely improved. Furthermore, the M₇C₃ type and M₂₃C₆ type carbides are high in the hardness as mentioned above; accordingly, even under presence of much residual austenite, high hardness can be maintained and the indentation resistance can be improved. The M₇C₃ type and M₂₃C₆ type carbides that are higher in the hardness and more difficult to be coarsened than the M₃C type carbide can be predominantly precipitated when, as well be mentioned below, mainly Cr that is carbide forming element is contained more abundantly (3.2 to 5.0% by weight) than an existing steel or when Mo is appropriately added.

### Average Grain Diameter and Maximum Grain Diameter of Carbide of Surface Layer Portion

When an average grain diameter of carbide of a surface layer portion is too small, an area ratio of the total precipitated carbide of a surface layer portion cannot be made such a high area ratio as 15 to 25%. Moreover, an average grain diameter is practically difficult to make less than 0.3 µm. Accordingly, the lower limit value of the average grain diameter is set at 0. 3 µm. Furthermore, when the average grain diameter is too large, a dispersion reinforcement amount is lowered, and, when a solid solution carbon amount in a residual austenite amount of a surface layer portion is set at a predetermined amount, predetermined hardness cannot be obtained; accordingly, the upper limit value is set at 0.6 µm.

When the maximum grain diameter of carbide of a surface layer portion is too large, it works as an internal defect to deteriorate the service life in clean oil; accordingly, the maximum limit value is set at 4 µm.

### Surface Hardness

When the surface hardness is too small, the static load capacity becomes insufficient to result in local permanent deformation due to overload and impact load during rest or low-speed rotation. Accordingly, the surface hardness is set at HRC62 or more.

### Solid Solution Carbon Amount in Residual Austenite of Surface Layer Portion

From results of evaluation tests of examples and comparative examples, which are described below, it was found that rolling/sliding parts of which service life ratio (L₁₀ service life ratio when L₁₀ service life of quenched and tempered JIS SUJ2 is assigned to 1) is 10 or more and of which indentation depth ratio (depth ratio when the indentation depth of quenched and tempered JIS SUJ2 is assigned to 1) is 0.9 or less exist in a region A shown in Fig 1 that expresses relationship between the service life ratios and the indentation depth ratios and found as well that solid solution carbon amounts in residual austenite of the rolling/sliding parts exist in a region B shown in Fig. 2 that expresses the relationship therebetween. Based on the results, the lower limit of the solid solution carbon amount in the region B shown in Fig. 2, that is, 0.95% is set as a lower limit value of the solid solution carbon amount in the residual austenite, similarly, the upper limit, that is, 1.15% is set as an upper limit value of solid solution carbon amount in residual austenite.
It is preferable that the rolling/sliding part of the first aspect is formed of a steel containing C: 0.7 to 0.9% by weight and Cr: 3.2 to 5.0% by weight.
In the invention, a grain diameter of carburized carbide is made fine to improve the service life under foreign matter contaminated condition. In order to realize this, the M₇C₃ type and/or M₂₃C₆ type carbide that is slow in the grain growth due to the carburizing heating has to be predominantly precipitated than the M₃C type carbide. For the purpose intended, amounts of C and Cr are clearly stated in the invention.
Reasons why for limiting the respective numerical values in the rolling/sliding part of the first aspect of the invention are as follows.

### C Content

An element C is necessary to increase the hardness after the quenching to obtain the internal hardness to secure the strength. Furthermore, C is an indispensable element to make nonsolid solution carbide remain much before the carburizing and to make these remain fine and much even after the carburizing to enable to obtain excellent service life. Accordingly, since a sufficient amount of C necessary for generating nonsolid solution carbide has to be added, the lower limit value thereof is set at 0.7% by weight. However, when C is excessively added, the hardness after the spherodizing annealing is increased, the machinability before the carburizing is deteriorated and, as will be described below, since Cr is added more than in an existing bearing steel, coarse eutectic carbide that is likely to be a starting point of the fatigue failure during steel production tends to be generated; accordingly, the upper limit value is set at 0.9% by weight.

### Cr Content

In the next place, Cr is an important carbide forming element in the invention. The Cr is an indispensable element in that it generates a lot of nonsolid solution carbide in a stage before the carburizing, the nonsolid solution carbide works as precipitating nucleuses to precipitate fine carbides (in particular, the M₇C₃ type and/or M₂₃C₆ type carbide having high hardness) in a surface carburized layer after the carburizing, and thereby the longer service life is enabled to obtain. Accordingly, in order to sufficiently obtain the advantage, Cr has to be contained much more than the existing bearing steel; accordingly, the lower limit value is set at 3.2% by weight. However, when it is excessively contained, it becomes difficult to inhibit coarse eutectic carbide that becomes a starting point of the fatigue failure from generating and the cost becomes higher; accordingly, the upper limit value is set at 5.0% by weight.
In existing relationship between the average grain diameters and the area ratios, in general, as the area ratio becomes larger, the average grain diameter becomes larger. In the first aspect of the invention, a novel point is in that, even when the area ratio is large, the average grain diameter is inhibited as far as possible from becoming coarser. A point that enables to realize this is in that a steel made of material components that are optimized in the C content and Cr content in the invention is subjected to the spherodizing annealing to precipitate a lot of fine carbide, followed by carburizing at a high concentration to precipitate alloyed carbide.
It is preferable that, in the rolling/sliding part of the first aspect of the invention, a total carbon amount of a surface layer portion is set in the range of 1.4 to 1.8% by weight.
Reasons why for limiting the total carbon amount of a surface layer portion in the rolling/sliding part of the first aspect of the invention in the range of 1.4 to 1.8% by weight are as follows.
That is, when the total carbon amount of the surface layer portion is too small, a solid solution carbon amount in the residual austenite cannot be set at a predetermined amount and, with the area ratio of the carbide maintained such high as 15 to 25%, the surface hardness cannot be set at HRC62 or more; accordingly, the longer service life and indentation resistance cannot be simultaneously realized. Accordingly, the lower limit value of the total carbon amount is set at 1.4% by weight. Furthermore, when the total carbon amount of the surface layer portion is too much, coarse carbide (free carbide) is inevitably generated, thereby the rolling life, in particular, the rolling life in clean oil is adversely affected. Accordingly, the upper limit value of the total carbon amount is set at 1.8% by weight.
It is preferable that, in the rolling/sliding part of the first aspect of the invention, the steel is made of C: 0.7 to 0.9% by weight, Si: 0.05 to 0.7% by weight, Mn: 0.05 to 0.7% by weight, Cr: 3.2 to 5.0% by weight, Al: 0.04% by weight or less, P: 0.03% by weight or less, S: 0.03% by weight or less, Ti: 0.005% by weight or less, O: 0.0015% by weight or less, at least one kind of Mo: less than 1.0% by weight and V: less than 0.50% by weight and a balance made of Fe and unavoidable impurities.
Reasons why for limiting components of C and Cr are same as mentioned above. Reasons why for limiting components other than C and Cr are as follows.
It is preferable that, in the rolling/sliding part of the first aspect of the invention, inner and outer rings and a rolling element are provided and at least one of the inner and outer rings and the rolling element is made of the foregoing parts.
According to a second aspect of the invention, a production method of a rolling/sliding part includes: applying a spherodizing annealing treatment to a steel that contains C: 0.7 to 0.9% by weight, Si: 0.05 to 0.7% by weight, Mn: 0.05 to 0.7% by weight, Cr: 3.2 to 5.0% by weight, A1: 0.04% by weight or less, P: 0.03% by weight or less, S: 0.03% by weight or less, Ti: 0.005% by weight or less, O: 0.0015% by weight or less, at least one kind of Mo: less than 1.0% by weight and V: less than 0.50% by weight and a balance made of Fe and unavoidable impurities to make a lot of carbide precipitate; after that, processing into a predetermined shape to produce a processed part raw material; after that, heating in a carburizing atmosphere of which carbon potential is 1.0 to 1.5% at a temperature in the range of 870 to 950°C to apply a first carburizing process followed by quenching; subsequently, heating in a carburizing atmosphere of which carbon potential is 1.0 to 1.5% at a temperature in the range of 870 to 910°C to apply a second carburizing process followed by quenching; and applying a tempering treatment to render an area ratio of a total precipitated carbide of the surface layer portion in the range of 15 to 25%, to render, of the total precipitated carbide present in a surface portion, 50% or more of the carbide by the area ratio a M₇C₃ type and/or M₂₃C₆ type, to render an average grain diameter of the carbide of the surface layer portion in the range of 0.3 to 0.6 µm and a maximum grain diameter thereof 4 µm, to render the surface hardness 62 or more by Rockwell C hardness and to render a solid solution carbon amount in a residual austenite of the surface layer portion in the range of 0.95 to 1.15% by weight.

In the first and second aspects of the invention, reasons why for limiting contents of the respective elements other than C and Cr of steel being used and for limiting the respective numerical values in the carburizing are as follows. Reasons why for limiting the contents of C and Cr in the steel being used are same as mentioned above. Furthermore, reasons why for limiting an area ratio of total precipitated carbide of a surface layer portion after the carburizing, amounts of M₇C₃ type and/or M₂₃C₆ type in the total precipitated carbide of the surface layer portion after the carburizing, an average grain diameter and the maximum grain diameter of the carbide of the surface layer portion after the carburizing, the surface hardness and a solid solution carbon amount in the residual austenite of the surface layer portion after the carburizing are same as mentioned above.

### Si Content

At first, Si is an element necessary for deoxidizing when steel is refined and difficult to dissolve in carbide. Accordingly, when Si is contained, it disturbs carbide from becoming coarser. That is, Si is an element that can advantageously suppress the carbide from growing large. Accordingly, in order to obtain the advantage, a slight amount thereof has to be contained and the lower limit value thereof is set at 0.05% by weight. However, when Si is excessively contained, owing to reinforcement of ferrite, the hardness after the spherodizing annealing is increased to deteriorate the machinability before the carburizing; accordingly, the upper limit value is set at 0.70% by weight.

### Mn Content

In the next place, Mn is an element that stabilizes austenite. When a content of Mn is increased, an amount of residual austenite can be readily increased; accordingly, the lower limit value thereof is set at 0.05% by weight. However, when Mn is increased, the solid solution temperature of the carbide at the carburizing heating is lowered. Accordingly, when it is excessively contained, there is a problem in that an amount of nonsolid solution carbide is decreased to decrease a hardness improvement effect due to precipitation of carbide in a carburized layer and excellent life can be secured only with difficulty. Furthermore, when Mn is increased, there is another problem in that the hot workability and the machinability are deteriorated. In this connection, in the invention, a necessary residual austenite amount is obtained mainly by increasing C and, in order to secure the minimum required hardenability, the upper limit of Mn is set at 0.7% by weight. The upper limit value of the Mn content is preferably set at 0.50% by weight.

### Al Content

Then, Al is an element necessary for deoxidizing during the refining of steel. However, when the content thereof is increased, alumina based nonmetallic inclusions are increased, and thereby, not only cracks and surface flaws tend to be generated during production of steel material but also peeling start points during the rolling fatigue tend to be generated. Accordingly, Al is desirably suppressed to a minimum amount required for deoxidizing; accordingly, the upper limit value is set at 0.04% by weight.

### P Content

In the next place, P is segregated at an austenite grain boundary to deteriorate the toughness of steel; accordingly, the upper limit value thereof is set at 0.03% by weight.

### S Content

Then, S is known to combine with Mn to form MnS to improve the machinability. However, when S is excessively contained, MnS becomes coarse to be peeling start point during the rolling fatigue; accordingly, the upper limit value thereof is set at 0.03% by weight.

### Ti Content

In the next place, Ti is known to combine with N to form TiN that is a nonmetallic inclusion to deteriorate the rolling fatigue life. The TiN inclusion increases with an increase of a content of Ti and becomes coarser; accordingly, the upper limit value thereof is set at 0.005% by weight. From the above reasons, the content of Ti is preferably smaller even within the above range.

### O Content

Then, much of O combines with Al in the steel and Ca slightly present as an impurity therein to exist in the steel as oxide based inclusions. The oxide based inclusion is known to be a peeling start point during rolling fatigue to deteriorate the rolling fatigue life. Accordingly, steel makers have developed technologies that enable to reduce an O amount as far as possible in the steel. From such a background, the upper limit value thereof is set at 0.0015% by weight. Furthermore, from the same reasons, the O content is desirably as small as possible even within the upper limit value.

### Mo Content

In the next place, Mo is a carbide forming element stronger in the affinity with C than with Cr and raises a solid solution temperature of carbide during the carburizing to increase an amount of nonsolid solution carbide. Accordingly, Mo is important element in the invention in that an amount of fine carbide of a surface carburized layer after the carburizing is increased to increase the hardness. Furthermore, Mo is an element that improves the hardenability of steel, contributes to increase an amount of the residual austenite and has an effect of effectively precipitating M₂₃C₆ type carbide. Accordingly, at least one of two kinds of Mo and V described below is added to increase the surface hardness. However, when Mo is excessively contained, not only the cost is increased but also coarse eutectic carbide that becomes a start point of the fatigue failure during the production of steel material; accordingly, the content thereof is set at less than 1.0% by weight. The lower limit value is not particularly restricted; however, in order to obtain the advantage, Mo is preferably contained by 0.10% by weight or more.

### V Content

Next, V is a carbide forming element very strong in the affinity with C and, since VC that is a generated V carbide is very high in the solid solution temperature in comparison with that of carbide of Mo, in a carburizing temperature region of a production method of the invention described below, much of VC present before the carburizing is not solid-solved. Accordingly, the nonsolid solution carbide becomes a precipitating nucleus of carbide in a carburizing layer during the carburizing to contributes to make the carbide fine; accordingly, at least one of two kinds including Mo mentioned above is added to improve the hardness and the service life. In particular, since much of VC is not solid-solved by heating during the carburizing, the surface hardness can be improved more largely than Mo; accordingly, of Mo and V, a single addition of V can impart higher hardness than a single addition of Mo. However, when V is contained excessively, since C is disturbed from diffusing, a carbon concentration of a carburized surface is increased with difficulty and an amount of solid solution carbon is decreased owing to the generation of VC to be difficult to secure an amount of necessary residual austenite; accordingly, the content thereof is set less than 0.50% by weight. Although the lower limit value is not particularly restricted, in order to obtain the advantage, V is preferably contained by 0.05% by weight or more.

### First Carburizing Temperature

When the carburizing temperature is less than 870°C, carbon is diffused at a slower speed to necessitate a huge time and cost to obtain required heat-treatment quality and a huge amount of soot is generated. Furthermore, when it exceeds 950°C, a solid solution amount of nonsolid solution carbide before the carburizing increases, a decrease in an amount of and coarsening of precipitated carbide after the carburizing are caused and, as austenite grains are made coarser, coarse carbides precipitate at a grain boundary thereof to deteriorate a function as a rolling/sliding part. Still furthermore, depending on the component, when a high temperature is used to process, in some cases, a ratio of the M₇C₃ type and M₂₃C₆ type carbides decreases to increase the M₃C type carbide that is larger in the growth speed to further promote the coarsening of the carbide. Accordingly, the carburizing temperature should be selected within the range of 870 to 950°C. When the first carburizing is applied at an appropriate temperature like this, nonsolid solution carbide that is generated before the carburizing can be suppressed from solid-solving and the carbide is precipitated much and fine after the carburizing, resulting in largely improving the service life. Usually, a little before (before substantially 30 min) applying the quenching at the last of the carburizing, in order to control the quenching temperature, frequently, a temperature is a little altered. The carburizing temperature is a temperature before alteration.

### Carbon Potential of First Carburizing Atmosphere

When the carburizing temperature is set in the range of 870 to 950°C to suppress the carbide from solid-solving and growing during the processing and the carbon potential is set at 1.0% or more, fine carbide of which an average grain diameter is in the range of 0.3 to 0.6 µm and the maximum grain diameter is 4 µm or less can be dispersed and precipitated much in a surface layer portion so as to be 15 to 25% by the area ratio and, as the result, the service life in lubricant oil contaminated with foreign matters can be largely improved. The upper limit value of the carbon potential is set at 1.5% to inhibit the soot from generating much.

### Second Carburizing Temperature

When the second carburizing temperature is less than 870°C, the soot is generated much to increase the maintenance cost of the device and the diffusion speed of the carbon is deteriorated to lengthen the carburizing time to increase the production cost. Furthermore, when the second carburizing temperature exceeds 910°C, the carbide is promoted in the coarsening to result in incapability of obtaining the maximum grain diameter of 4 µm or less. Accordingly, the second carburizing temperature should be set in the range of 870 to 910°C.

### Carbon Potential of Second Carburizing Atmosphere

Reasons why for limiting the carbon potential are same as that of the first carburizing atmosphere.

According to the rolling/sliding part of the first aspect of the invention, not only in the case where clean lubricant oil is used but also in the case where lubricant oil contaminated with foreign matter is used, longer service life can be realized, the static load capacity can be increased to improve the indentation resistance and a local permanent deformation amount due to overload and impact load during rest and low-speed rotation can be lessened.
It is preferred that, in the rolling/sliding part of the first aspect of the invention, a C content and a Cr content are further optimized. Thereby, since fine and high hardness M₇C₃ type and/or M₂₃C₆ type carbides can be precipitated much in a surface layer portion, the carbide can be assuredly inhibited from growing during the carburizing.
It is preferred that, in the rolling/sliding part according to the first aspect of the invention, a total carbon amount of a surface layer portion is set in an appropriate range. Thereby, since an area ratio of the carbide of the surface layer portion after the carburizing can be controlled in an appropriate range, a rolling bearing and a sliding bearing that use the rolling/sliding part can be further lengthened in the service life.
It is preferred that, in the rolling/sliding part according to the first aspect of the invention, ranges of all addition elements are optimized. Thereby, similarly to the above, components are advantageously set so as to precipitate much fine carbides of M₇C₃ type and/or M₂₃C₆ type and inclusions of Ti and Al, which become a start point of the fatigue failure, can be suppressed low; accordingly, a rolling/sliding part having longer service life can be obtained.
It is preferred that, in the rolling/sliding part according to the first aspect of the invention, the service life in lubricant oil contaminated with foreign matters and in clean lubricant oil can be lengthened. Furthermore, the indentation resistance can be improved and a local permanent deformation amount due to overload and impact load during rest and low-speed rotation can be lessened.
According to a second aspect of the invention, a production method of the invention of a rolling/sliding part allows assuredly obtaining a part in which fine M₇C₃ type, M₂₃C₆ type carbides are precipitated much, resulting in largely contributing to improve the service life of the rolling/sliding part and the indentation resistance due to an increase in the static load capacity.

### BRIEF DESCRIPTION OF THE DRAWINGS

Fig. 1 is a graph showing relationship between L₁₀ life ratios and indentation depth ratios, which are obtained from results of evaluation tests of rolling/sliding parts of examples and comparative examples;
Fig. 2 is a graph showing relationship between area ratios of total precipitated carbides and solid solution carbon amounts in residual austenite of rolling/sliding parts of examples and comparative examples;
Fig. 3 includes diagrams showing a first carburizing treatment and a second carburizing treatment of a heat treatment condition 1;
Fig. 4 includes diagrams showing a first carburizing treatment and a second carburizing treatment of a heat treatment condition 5;
Fig. 5 is a diagram showing a quenching treatment of a heat treatment condition 7;
Fig. 6 is a diagram showing a carburizing treatment of a heat treatment condition 9;
Fig. 7 is a diagram showing a carburizing treatment of a heat treatment condition 10;
Fig. 8 is a diagram showing a carburizing treatment of a heat treatment condition 11;
Fig. 9 is a diagram showing a carburizing treatment of a heat treatment condition 12;
Fig. 10 includes diagrams showing a carburizing treatment and a quenching treatment of a heat treatment condition 17;
Fig. 11 includes diagrams showing a first carburizing treatment and a second carburizing treatment of a heat treatment condition 18;
Fig. 12 includes a diagram showing a carburizing treatment and a quenching treatment of a heat treatment condition 21;
Fig. 13 includes a diagram showing a first carburizing treatment and a second carburizing treatment of a heat treatment condition 22; and
Fig. 14 is a schematic diagram showing a method of forming an indentation on a test piece in an indentation resistance test.

### DETAILED DESCRIPTION OF THE PREFERRED EMBODIMENTS

In what follows, specific examples of the invention will be described together with comparative examples thereof.

### Examples 1 through 6 and Comparative Examples 1 through 16

Four kinds of steels having compositions shown in Table 1 are prepared. As mentioned above, in order to obtain excellent workability and high hardness after the carburizing, from the necessity of precipitating carbide much before the carburizing, the steels are spherodizing annealed, followed by forming into 22 kinds of inner ring materials that are used in a type 6206 rolling bearing, further followed by heating the inner ring materials under heat treatment conditions 1 through 22, thereby inner rings (examples 1 through 6 and comparative examples 1 through 16) are produced.

**[Table 1]**

| Kind of Steel | Composition (% by weight) | | | | | | | | | | |
|---|---|---|---|---|---|---|---|---|---|---|---|
| | C | Si | Mn | P | S | Cr | Mo | V | Al | Ti | O |
| A (SUJ2) | 1.03 | 0.25 | 0.40 | 0.015 | 0.002 | 1.46 | - | - | 0.032 | 0.0012 | 0.0005 |
| B | 0.2 | 0.29 | 0.81 | 0.02 | 0.015 | 1.1 | - | - | 0.035 | 0.0036 | 0.0014 |
| C | 0.79 | 0.5 | 0.4 | 0.019 | 0.004 | 3.49 | 0.15 | 0.2 | 0.018 | 0.002 | 0.001 |
| D | 0.80 | 0.5 | 0.4 | 0.002 | 0.003 | 3.48 | 0.43 | 0.30 | 0.02 | 0.0022 | 0.0009 |

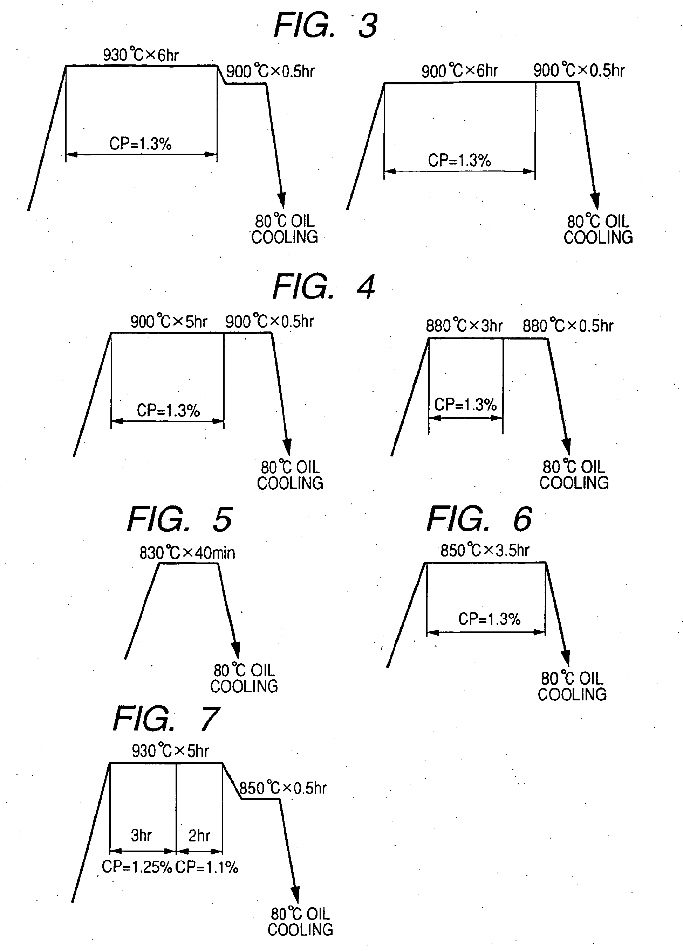

In the Table 1, balances of all steels are Fe and unavoidable impurities.
A heat treatment condition 1 includes a first carburizing treatment, a second carburizing treatment and a tempering treatment. As shown in Fig. 3, the first carburizing treatment includes keeping at 930°C for 6 hr in a carburizing atmosphere having the carbon potential of 1.3%, subsequently keeping at 900°C for 0.5 hr in an appropriate atmosphere, followed by oil cooling to 80°C. Similarly as shown in Fig. 3, the second carburizing treatment includes keeping at 900°C for 6 hr in a carburizing atmosphere having the carbon potential of 1.3%, followed by keeping at 900°C for 0.5 hr in an appropriate atmosphere, further followed by oil cooling to 80°C. The tempering treatment includes air cooling after keeping at 160°C for 2 hr.
In a heat treatment condition 2, the tempering temperature of the heat treatment condition 1 is set at 200°C.

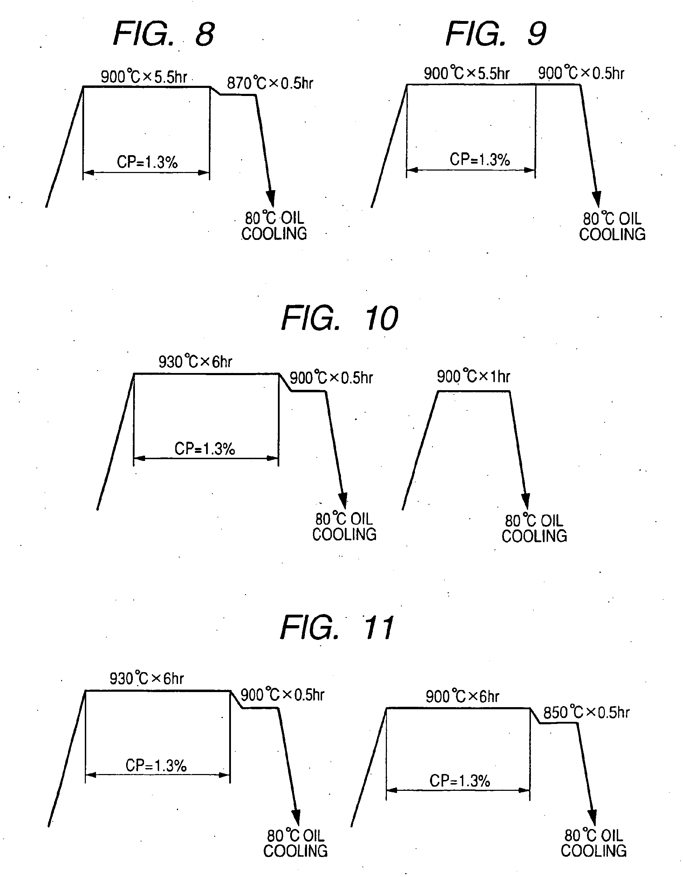

A heat treatment condition 3 is same as the heat treatment condition 1.
In a heat treatment condition 4, the tempering temperature of the heat treatment condition 1 is set at 200°C.
A heat treatment condition 5 includes a first carburizing treatment, a second carburizing treatment and a tempering treatment. As shown in Fig. 4, the first carburizing treatment includes keeping at 900°C for 5 hr in a carburizing atmosphere having the carbon potential of 1'.3%, followed by keeping at 900°C for 0.5 hr in an appropriate atmosphere, further followed by oil cooling to 80°C. Similarly as shown in Fig. 4, the second carburizing treatment includes keeping at 880°C for 3 hr in a carburizing atmosphere having the carbon potential of 1.3%, followed by keeping at 880°C for 0.5 hr in an appropriate atmosphere, further followed by oil cooling to 80°C. The tempering treatment includes air cooling after keeping at 160°C for 2 hr.
In a heat treatment condition 6, the tempering temperature of the heat treatment condition 5 is set at 200°C.
A heat treatment condition 7, as shown in Fig. 5, includes keeping at 830°C for 40 min followed by oil cooling to 80°C to quench, further followed by keeping at 180°C for 2 hr, followed by air cooling to temper.
In a heat treatment condition 8, the heating temperature at the quenching treatment of the heat treatment condition 7 is set at 900°C.
A heat treatment condition 9, as shown in Fig. 6, includes keeping at 850°C for 3.5 hr in a carburizing atmosphere of which carbon potential is 1.3% to carburize, followed by oil cooling to 80°C, further followed by keeping at 160°C for 2 hr, followed by air cooling to temper.
A heat treatment condition 10, as shown in Fig. 7, includes keeping at 930°C for 3 hr in a carburizing atmosphere having the carbon potential of 1.25%, followed by keeping at 930°C for 2 hr in a carburizing atmosphere having the carbon potential of 1.1%, further followed by keeping at 850°C for 0.5 hr in an appropriate atmosphere to carburize, followed by oil cooling to 80°C, still further followed by keeping at 180°C for 2 hr, followed by air cooling to temper.
A heat treatment condition 11, as shown in Fig. 8, includes keeping at 900°C for 5.5 hr in a carburizing atmosphere of which carbon potential is 1.3%, followed by keeping at 870°C for 0.5 hr in an appropriate atmosphere to carburize, further followed by oil cooling to 80°C, still further followed by keeping at 160°C for 2 hr, followed by air cooling to temper.
A heat treatment condition 12, as shown in Fig. 9, includes keeping at 900°C for 5.5 hr in a carburizing atmosphere of which carbon potential is 1.3%, followed by keeping at 900°C for 0.5 hr in an appropriate atmosphere to carburize, followed by oil cooling to 80°C, still further followed by keeping at 160°C for 2 hr, followed by air cooling to temper.
In a heat treatment condition 13, the heating temperature and time in the carburizing atmosphere in the carburizing treatment in the heat treatment condition 11, respectively, are set at 930°C and 6 hr.
In a heat treatment condition 14, the heating temperature and time in the carburizing atmosphere in the carburizing treatment in the heat treatment condition 11, respectively, are set at 930°C and 6 hr, and the heating temperature in air where the carburizing gas is not present is set at 900°C.
In a heat treatment condition 15, the tempering temperature of the heat treatment condition 14 is set at 180°C.
In a heat treatment condition 16, the tempering temperature of the heat treatment condition 14 is set at 200°C.
A heat treatment condition 17 includes, as shown in Fig. 10, keeping at 930°C for 6 hr in a carburizing atmosphere of which carbon potential is 1.3%, followed by keeping at 900°C for 0.5 hr in an appropriate atmosphere to carburize, further followed by oil cooling to 80°C, still further followed by keeping at 900°C for 1 hr, followed by oil cooling to 80°C to quench, further followed by keeping at 160°C for 2 hr, followed by air cooling to temper.

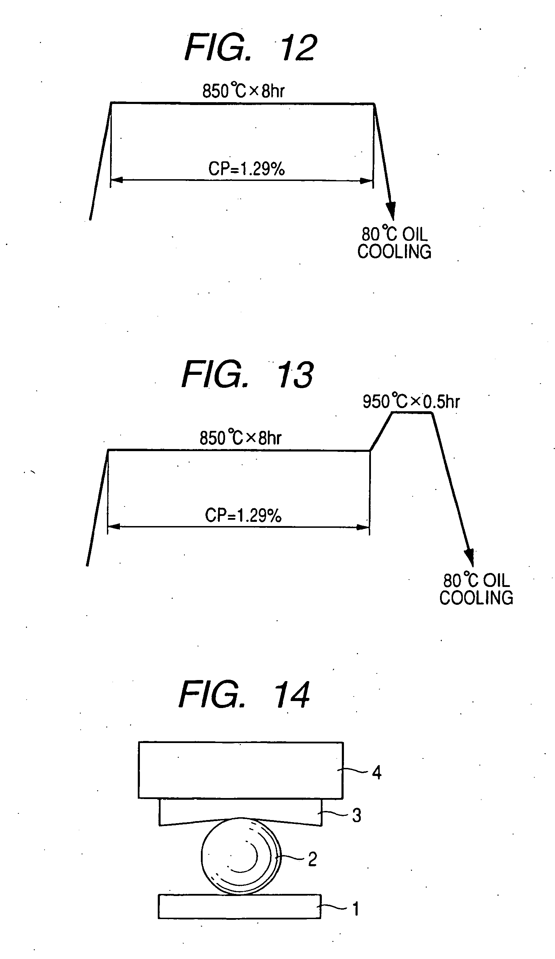

A heat treatment condition 18 includes a first carburizing treatment, a second carburizing treatment and a tempering treatment. As shown in Fig. 11, the first carburizing treatment includes keeping at 930°C for 6 hr in a carburizing atmosphere of which carbon potential is 1.3%, followed by keeping at 900°C for 0.5 hr in an appropriate atmosphere, further followed by oil cooling to 80°C. Similarly as shown in Fig. 11, the second carburizing treatment includes keeping at 900°C for 6 hr in a carburizing atmosphere of which carbon potential is 1.3%, followed by keeping at 850°C for 0.5 hr in an appropriate atmosphere, further followed by oil cooling to 80°C. The tempering treatment includes air cooling after keeping at 160°C for 2 hr.
In a heat treatment condition 19, the heating temperature of the quenching of the heat treatment condition 17 is set at 950°C.
In a heat treatment condition 20, the heating temperature in an appropriate atmosphere in the second carburizing treatment of the heat treatment condition 18 is set at 950°C.
A heat treatment condition 21 includes, as shown in Fig. 12, keeping at 850°C for 8 hr in a carburizing atmosphere of which carbon potential is 1.29% to carburize, followed by oil cooling to 80°C, further followed by keeping at 160°C for 2. hr, followed by air cooling to temper.
A heat treatment condition 22 includes, as shown in Fig. 13, keeping at 850°C for 8 hr in a carburizing atmosphere of which carbon potential is 1.29%, followed by keeping at 950°C for 0.5 hr in an appropriate atmosphere to carburize, further followed by oil cooling to 80°C, still further followed by keeping at 160°C for 2 hr, followed by air cooling to temper.
Of thus produced examples 1 through 6 and comparative examples 1 through 16, kinds of steels of inner rings, heat treatment conditions, surface hardness of bearing surfaces of inner rings after heat treatment (HRC), total carbon amounts of surface layer portions of bearing surfaces, area ratios of carbides precipitated in the surface layer portion of the bearing surfaces, maximum grain diameters and average grain diameters of carbides precipitated in the surface layer portions of the bearing surfaces, solid solution carbon amounts in residual austenite (γR) and total area ratios of M₇C₃ type and M₂₃C₆ type carbides are shown in Tables 2A and 2B.

**[Table 2A]**

| | | Kind of Steel | Heat treatment Condition | Surface Hardness (HRC) | Total Carbon Amount (%) | Area Ratio of Carbide (%) | Maximum Grain Diameter of Carbide (µm) | Average Grain Diameter of Carbide (µm) | Solid Solution Carbon Amount in yR (% by weight) | Area Ratio of M₇C₃/M₂₃C₆ Carbide (% by weight) | L₁₀ Life Ratio | Indentation Depth Ratio |
|---|---|---|---|---|---|---|---|---|---|---|---|---|
| Example | 1 | C | 1 | 65 | 1.5 | 15.7 | 2.5 | 0.47 | 0.98 | 65 | 11.5 | 0.875 |
| | 2 | | 2 | 63 | 1.55 | 18.7 | 2 | 0.49 | 0.95 | 60 | 10.2 | 0.686 |
| | 3 | | 3 | 65.3 | 1.6 | 16.5 | 2.7 | 0.53 | 1.04 | 55 | 14.5 | 0.75 |
| | 4 | | 4 | 63.5 | 1.6 | 23 | 2.9 | 0.57 | 1.01 | 58 | 12 | 0.644 |
| | 5 | D | 5 | 64.5 | 1.45 | 18 | 2.2 | 0.38 | 1.03 | 75 | 16 | 0.8 |
| | 6 | | 6 | 63.5 | 1.45 | 21.5 | 2.9 | 0.43 | 0.99 | 70 | 12.5 | 0.5 |
| Comparative Example | 1 | A | 7 | 62.6 | 1.0 | 6 | 1.3 | 0.37 | 0.68 | 0 | 1 | 1 |
| | 2 | | 8 | 64 | 1.0 | 3.5 | 1.1 | 0.25 | 0.87 | 0 | 1.1 | 1.2 |
| | 3 | | 9 | 65.3 | 1.3 | 11 | 2.2 | 0.45 | 0.86 | 0 | 3 | 0.77 |
| | 4 | B | 10 | 61 | 0.8 | 1.1 | 0.3 | 0.22 | 0.80 | 0 | 1.1 | 1.155 |
| | 5 | D | 11 | 64.7 | 1.4 | 13 | 1.7 | 0.31 | 0.89 | 70 | 7.8 | 0.931 |

**[Table 2B]**

| | | Kind of Steel | Heat treatment Condition | Surface Hardness (HRC) | Total Carbon Amount (%) | Area Ratio of Carbide (%) | Maximum Grain Diameter of Carbide (µm) | Average Grain Diameter of Carbide (µm) | Solid Solution Carbon Amount in yR (% by weight) | Area Ratio of M7C3/M23C6 Carbide (% by weight) | L10 Life Ratio | Indentation Depth Ratio |
|---|---|---|---|---|---|---|---|---|---|---|---|---|
| Comparative Example | 6 | D | 12 | 64 | 1.4 | 11.3 | 2.5 | 0.33 | 0.97 | 70 | 14.4 | 1.365 |
| | 7 | C | 13 | 64.4 | 1.25 | 12.5 | 1 | 0.32 | 0.96 | 65 | 6.7 | 0.966 |
| | 8 | | 14 | 64.4 | 1.25 | 11.6 | 2.4 | 0.37 | 1.02 | 65 | 12.5 | 1.442 |
| | 9 | | 15 | 63 | 1.3 | 9.5 | 2.2 | 0.31 | 0.98 | 60 | 5.5 | 1.25 |
| | 10 | | 16 | 62.7 | 1.25 | 10.1 | 1.9 | 0.31 | 0.98 | 60 | 4.6 | 1.1 |
| | 11 | | 17 | 64.9 | 1.25 | 9.8 | 2.3 | 0.29 | 0.84 | 65 | 5.8 | 0.903 |
| | 12 | | 18 | 65.5 | 1.55 | 23 | 4.5 | 0.58 | 0.85 | 55 | 3.5 | 0.665 |
| | 13 | | 19 | 62.5 | 1.25 | 5.4 | 3.3 | 0.3 | 1.21 | 70 | 11 | 1.61 |
| | 14 | | 20 | 63 | 1.55 | 17 | 4.5 | 0.65 | 1.15 | 60 | 14 | 1.46 |
| | 15 | A | 21 | 65.5 | 1.6 | 16.5 | 6.5 | 0.75 | 0.88 | 0 | 2.8 | 0.65 |
| | 16 | | 22 | 61.5 | 1.6 | 11.1 | 7 | 0.8 | 1.04 | 0 | 3 | 1.25 |

### Life Test

Each of inner rings of examples 1 through 6 and comparative examples 1 through 16 is combined with an outer ring that is made of JIS SUJ2 and exposed to an ordinary carburizing treatment and balls to assemble a type No. 6206C3 ball bearing. The ball bearing is subjected to the life test with lubricant oil contaminated with foreign matters. Test conditions are shown in Table 3.

**[Table 3]**

| | |
|---|---|
| Load | Fr = 9000 N/set |
| Number of Rotations | 2500 rpm |
| Foreign Matter | High-speed steel powder, 0.06 mass percent (hardness: 730 HV, grain diameter: 100 to 150 µm) |
| Lubricant | Turbine oil #68 oil bath (air agitation) |
| Oil Temperature | Natural temperature-up (substantially 100°C) |
| Calculated Life (Lh) | 67.8 h |
| Test Method | 2 set × 5 times sudden death test |
| Test Sample Type No. | 6206 |

A test machine shown in Table 3 can test simultaneously two ball bearings and radial load in Table 3 means radial load per one ball bearing.

### Indentation Resistance Test

In order to investigate the indentation resistance of each of inner rings of examples 1 through 6 and comparative examples 1 through 16, similarly to the cases of inner rings of examples 1 through 6 and comparative examples 1 through 16, after four kinds of steels having compositions shown in Table 1 are subjected to spherodizing annealing, 22 kinds of planar test pieces for use in indentation resistance test are prepared, and the test pieces are heat treated under the heat treatment conditions 1 through 22. Then, as shown in Fig. 14, a steel ball (2) is placed on each (1) of test pieces, under condition shown in Table 4, the steel ball (2) is pressed through a tool (3) against the test piece (1) by use of an Amsler head (4) to indent and the indentation depth is measured by use of a three-dimensional profilometer. It goes without saying that kinds of steels of 22 kinds of test pieces (1), heat treatment conditions, surface hardness of bearing surfaces of inner rings after heat treatment (HRC), total carbon amounts of surface layer portions of bearing surfaces, area ratios of carbides precipitated in the surface layer portion of the bearing surfaces, maximum grain diameters and average grain diameters of carbides precipitated in the surface layer portions of the bearing surfaces, solid solution carbon amounts in residual austenite (γR) and total area ratios of M₇C₃ type and M₂₃C₆ type carbides are same as that shown in Tables 2A and 2B.

**[Table 4]**

| | | |
|---|---|---|
| Test Machine | | Amsler (10t) |
| Diameter of Steel Ball D | | 15/16 inch |
| Load Condition | Maximum Contact Surface Pressure (P max) between Test Piece and Steel Ball | Four kinds of loads of 4000, 4500, 5000 and 5500 |
| | Loading Time | 1 min |

The L₁₀ life ratios and indentation depths as well are shown in Tables 2A and 2B.
The L₁₀ life ratio in Tables 2A and 2B is obtained in such a manner that two ball bearings provided with the same inner rings are set to a test machine, a test where a time until any one of the inner rings of the ball bearings is destroyed is measured is repeated 5 times, an average time up to the failure is taken as the L₁₀ life, and the L₁₀ life is compared with a L₁₀ life of comparative example 1 (quenched and tempered JIS SUJ2) assigned to 1 to obtain the L₁₀ life ratio. Furthermore, the indentation depth ratio is similarly obtained with an indentation depth of comparative example 1 (quenched and tempered JIS SUJ2) assigned to 1.
As obvious from results shown in Table 2A, in examples 1 through 6, the life can be lengthened and the static load capacity can be increased to improve the indentation resistance to the indentation due to the plastic deformation during rest or low-speed rotation. On the other hand, in comparative examples 1 through 16, at least one of the life and the indentation resistance is poor in the performance.

## Claims

1. A rolling/sliding part formed of a steel having a surface layer portion a surface of which is carburized,
wherein an area ratio of a total precipitated carbide of the surface layer portion is in a range of 15 to 25%;
50% or more, by the area ratio, of the total precipitated carbide present on the surface layer portion is made of a M₇C₃ type and/or M₂₃C₆ type;
an average particle diameter of the carbide of the surface layer portion is in a range of 0.3 to 0.6 µm, and a maximum particle diameter thereof is 4 µm;
the surface hardness is 62 or more by Rockwell C hardness; and
a solid solution carbon amount in a residual austenite of the surface layer portion is in a range of 0.95 to 1.15% by weight.

2. The rolling/sliding part according to claim 1, wherein the steel contains C: 0.7 to 0.9% by weight and Cr: 3.2 to 5.0% by weight.

3. The rolling/sliding part according to claim 1, wherein a total carbon amount of the surface layer portion is in the range of 1.4 to 1.8% by weight.

4. The rolling/sliding part according to claim 1, wherein the steel contains C: 0.7 to 0.9% by weight, Si: 0.05 to 0.7% by weight, Mn: 0.05 to 0.7% by weight, Cr: 3. 2 to 5.0% by weight, Al: 0.04% by weight or less, P: 0.03% by weight or less, S: 0.03% by weight or less, Ti: 0.005% by weight or less, O: 0.0015% by weight or less, at least one kind of Mo: less than 1.0% by weight and V: less than 0.50% by weight and a balance made of Fe and unavoidable impurities.

5. A roll bearing comprising: an inner ring, an outer ring and a rolling element, wherein at least one of the inner ring, the outer ring and the rolling element is made of the part according to claim 1.

6. A production method of a rolling/sliding part comprising the steps of:
applying a spheroidizing annealing treatment to a steel that contains C: 0.7 to 0.9% by weight, Si: 0.05 to 0.7% by weight, Mn: 0.05 to 0.7% by weight, Cr: 3.2 to 5. 0% by weight, Al: 0.04% by weight or less, P: 0.03% by weight or less, S: 0.03% by weight or less, Ti: 0.005% by weight or less, O: 0.0015% by weight or less, at least one kind of Mo: less than 1.0% by weight and V: less than 0.50% by weight and a balance made of Fe and unavoidable impurities to make a lot of carbide precipitate;
processing into a predetermined shape to produce a processed part raw material;
heating in a carburizing atmosphere of which carbon potential is in a range of 1.0 to 1.5% at a temperature in a range of 870 to 950°C to apply a first carburizing treatment followed by quenching;
subsequently heating in a carburizing atmosphere of which carbon potential is in the range of 1.0 to 1.5% at a temperature in a range of 870 to 910°C to apply a second carburizing treatment followed by quenching; and
applying a tempering treatment to render an area ratio of a total precipitated carbide of the surface layer portion in a range of 15 to 25%, to render, 50% or more, by the area ratio, of the total precipitated carbide present in a surface layer portion a M₇C₃ type and/or M₂₃C₆ type, to render an average particle diameter of the carbide of the surface layer portion in a range of 0.3 to 0.6 µm and a maximum particle diameter thereof 4 µm, to render the surface hardness 62 or more by Rockwell C hardness and to render a solid solution carbon amount in a residual austenite of the surface layer portion in a range of 0.95 to 1.15% by weight.

## Patentansprüche

1. Roll-/Gleitelement aus einem Stahl mit einem Oberflächenschichtbereich, dessen Oberfläche karburiert ist, wobei
ein Flächenverhältnis eines vollständig abgeschiedenen Karbids des Oberflächenschichtbereichs in einem Bereich von 15 bis 25 % liegt;
gemäß dem Flächenverhältnis 50 % oder mehr des vollständig abgeschiedenen Karbids, das auf dem Oberflächenschichtbereich vorhanden ist, aus einem Karbid vom M₇C₃-Typ und/oder M₂₃C₆-Typ hergestellt sind;
ein durchschnittlicher Teilchendurchmesser des Karbids des Oberflächenschichtbereichs in einem Bereich von 0,3 bis 0,6 µm liegt und ein maximaler Teilchendurchmesser desselben 4 µm beträgt;
die Oberflächenhärte 62 oder mehr Rockwell-C-Härte beträgt; und
ein Mischkristall-Kohlenstoffanteil in einem restlichen Austenit des Oberflächenschichtbereichs in einem Bereich von 0,95 bis 1,15 Gew.% liegt.

2. Roll-/Gleitelement nach Anspruch 1, wobei der Stahl 0,7 bis 0,9 Gew.% C und 3,2 bis 5,0 Gew.% Cr enthält.

3. Roll-/Gleitelement nach Anspruch 1, wobei eine Gesamtkohlenstoffmenge des Oberflächenschichtbereichs im Bereich von 1,4 bis 1,8 Gew.% liegt.

4. Roll-/Gleitelement nach Anspruch 1, wobei der Stahl enthält:
C: 0,7 bis 0,9 Gew.%
Si: 0,05 bis 0,7 Gew.%
Mn: 0,05 bis 0,7 Gew.%
Cr: 3,2 bis 5,0 Gew.%
Al: 0,04 Gew.% oder weniger
P: 0,03 Gew.% oder weniger
S: 0,03 Gew.% oder weniger
Ti: 0,005 Gew.% oder weniger
O: 0,0015 Gew.% oder weniger,
zumindest eine Art von Mo: weniger als 1,0 Gew.%, und
V: weniger als 0,50 Gew.%,
und einen Restbetrag aus Fe und unvermeidlichen Verunreinigungen.

5. Wälzlager, umfassend: einen Innenring, einen Außenring und ein Wälzelement, wobei der Innenring, der Außenring und/oder das Wälzelement aus einem Teil gemäß Anspruch 1 gefertigt ist/sind.

6. Herstellungsverfahren für ein Roll-/Gleitelement, umfassend die Schritte:
Anwenden einer Weichglühbehandlung an einem Stahl, der
C: 0,7 bis 0,9 Gew.%
Si: 0,05 bis 0,7 Gew.%
Mn: 0,05 bis 0,7 Gew.%
Cr: 3,2 bis 5,0 Gew.%
Al: 0,04 Gew.% oder weniger
P: 0,03 Gew.% oder weniger
S: 0,03 Gew.% oder weniger
Ti: 0,005 Gew.% oder weniger
O: 0,0015 Gew.% oder weniger,
zumindest eine Art von Mo: weniger als 1,0 Gew.%, und
V: weniger als 0,50 Gew.%,
und einen Restbetrag aus Fe und unvermeidlichen Verunreinigungen enthält, um einen großen Teil des Karbids abzuscheiden;
Bearbeiten zu einer vorbestimmten Form, um ein Bearbeitungsteil-Rohmaterial herzustellen,
Erwärmen in einer Karburierungsatmosphäre, bei der ein Kohlenstoffpotential in einem Bereich von 1,0 bis 1,5 % bei einer Temperatur in einem Bereich von 870 bis 950 °C liegt, um eine erste Karburierungsbehandlung anzuwenden, der ein Abkühlen folgt;
nachfolgendes Erwärmen in einer Karburierungsatmosphäre, bei der ein Kohlenstoffpotential in dem Bereich von 1,0 bis 1,5 % bei einer Temperatur in einem Bereich von 870 bis 910°C liegt, um eine zweite Karburierungsbehandlung anzuwenden, der ein Abkühlen folgt; und
Anwenden einer Vergütungsbehandlung, um ein Flächenverhältnis eines gesamt abgeschiedenen Karbids des Oberflächenschichtbereichs in einem Bereich von 15 bis 25 % zu erreichen, um gemäß dem Flächenverhältnis 50 % oder mehr des gesamt abgeschiedenen Karbids, das in einem Oberflächenschichtbereich vorhanden ist, als M₇C₃-Type und/oder M₂₃C₆-Typ zu erhalten, um einen durchschnittlichen Teilchendurchmesser des Karbids des Oberflächenschichtbereichs in einem Bereich von 0,3 bis 0,6 µm und einen maximalen Teilchendurchmesser desselben bei 4 µm zu halten, um die Oberflächenhärte von 62 oder mehr Rockwell-C-Härte zu erhalten und um einen Mischkristall-Kohlenstoffanteil in einem restlichen Austenit des Oberflächenschichtbereichs in einem Bereich von 0,95 bis 1,15 Gew.% zu erhalten.

## Revendications

1. Pièce roulante/coulissante formée d'un acier ayant une portion de couche de surface, dont une surface est carburée,
dans laquelle un coefficient d'un carbure précipité total de la portion de couche de surface est dans une plage de 15 à 25 % ;
50 % ou plus, par le coefficient, du carbure précipité total présent sur la portion de couche de surface, sont constitués de type M₇C₃ et/ou de type M₂₃C₆ ;
un diamètre moyen de particules du carbure de la portion de couche de surface est dans une plage de 0,3 à 0,6 µm, et un diamètre maximum de particules correspondant est de 4 µm ;
la dureté de surface est de 62 ou plus par une dureté Rockwell C ; et
une quantité de carbone en solution solide dans une austénite résiduelle de la portion de couche de surface est dans une plage de 0,95 à 1,15 % en poids.

2. Pièce roulante/coulissante selon la revendication 1, dans laquelle l'acier contient C : 0,7 à 0,9 % en poids et Cr : 3,2 à 5,0 % en poids.

3. Pièce roulante/coulissante selon la revendication 1, dans laquelle une quantité totale de carbone de la portion de couche de surface est comprise dans la plage de 1,4 à 1,8 % en poids.

4. Pièce roulante/coulissante selon la revendication 1, dans laquelle l'acier contient C : 0,7 à 0,9 % en poids, Si : 0,05 à 0,7 % en poids, Mn : 0,05 à 0,7 % en poids, Cr : 3,2 à 5,0 % en poids, Al : 0,04 % en poids ou moins, P : 0,03 % en poids ou moins, S : 0,03 % en poids ou moins, Ti : 0,005 % en poids ou moins, O : 0,0015 % en poids ou moins, au moins un type de Mo : moins de 1,0 % en poids et V : moins de 0,50 % en poids et le solde étant constitué de Fe et d'impuretés inévitables.

5. Palier de cylindre comprenant : une bague interne, une bague externe et un élément de roulement,
dans lequel au moins un élément parmi la bague interne, la bague externe et l'élément de roulement est constitué de la partie selon la revendication 1.

6. Procédé de production d'une partie roulante/coulissante comprenant les étapes constituées de :
l'application d'un traitement de recuit de sphéroïdisation à un acier qui contient C : 0,7 à 0,9 % en poids, Si : 0,05 à 0,7 % en poids, Mn : 0,05 à 0,7 % en poids, Cr : 3,2 à 5,0 % en poids, Al : 0,04 % en poids ou moins, P : 0,03 % en poids ou moins, S : 0,03 % en poids ou moins, Ti : 0,005 % en poids ou moins, O : 0,0015 % en poids ou moins, au moins un type de Mo : moins de 1,0 % en poids et V : moins de 0,50 % en poids et le solde étant constitué de Fe et d'impuretés inévitables pour obtenir beaucoup de précipité de carbure ;
le traitement en une forme prédéterminée pour produire une matière première à partie traitée ;
le chauffage dans une atmosphère de carburation dont le potentiel de carbone est compris entre 1,0 et 1,5 % à une température comprise entre 870 et 950°C pour appliquer un premier traitement de carburation suivi d'une trempe ;
le chauffage ensuite dans une atmosphère de carburation dont le potentiel de carbone est compris entre 1,0 et 1,5 %, à une température comprise entre 870 et 910°C pour appliquer un second traitement de carburation suivi d'une trempe ; et
l'application d'un traitement de trempe pour obtenir un coefficient de carbure précipité total de la portion de couche de surface entre 15 et 25 %, pour obtenir 50 % ou plus, par le coefficient, du carbure précipité total présent dans une portion de couche de surface d'un type M₇C₃ et/ou de type M₂₃C₆, pour obtenir un diamètre moyen de particule du carbure de la portion de couche de surface dans une plage de 0,3 à 0,6 µm et un diamètre maximum de particule correspondant de 4 µm, pour obtenir la dureté de surface de 62 ou plus par une dureté Rockwell C et pour obtenir une quantité de carbone en solution solide dans une austénite résiduelle de la portion de couche de surface dans une plage de 0,95 à 1,15 % en poids.
